# EUROPEAN PATENT SPECIFICATION

(11) **EP 3 239 797 B1**
(45) Date of publication and mention of the grant of the patent: **02.10.2019**
(21) Application number: 17167225.6
(22) Date of filing: 20.04.2017
(51) Int. Cl.: G05B 23/02

(54) **FIELD DEVICE MAINTENANCE APPARATUS, METHOD FOR MAINTAINING A FIELD DEVICE, AND STORAGE MEDIUM**
FELDGERÄTSWARTUNGSVORRICHTUNG, VERFAHREN ZUR FELDGERÄTSWARTUNG UND SPEICHERMEDIUM
DISPOSITIF POUR LA MAINTENANCE D'UN APPAREIL DE TERRAIN, PROCÉDÉ DE MAINTIEN D'UN APPAREIL DE TERRAIN ET SUPPORT DE STOCKAGE

(30) Priority: 25.04.2016 JP 2016086913
(43) Date of publication of application: 01.11.2017
(73) Proprietor: Yokogawa Electric Corporation, Tokyo 180-8750 (JP)
(72) Inventor: FURIHATA, Ryouhei, Musashino-shi, Tokyo (JP); KONO, Ayako, Musashino-shi, Tokyo (JP); IKETSUKI, Yuya, Musashino-shi, Tokyo (JP)
(74) Representative: Henkel, Breuer & Partner

(56) References cited:
- EP-A2- 1 262 848

## Description

### BACKGROUND OF THE INVENTION

### Field of the Invention

The present invention relates to a device maintenance apparatus, a device maintenance method, and a storage medium.

Priority is claimed on Japanese Patent Application No. 2016-086913, filed on April 25, 2016.

### Description of Related Art

In a plant, a factory, or the like (hereinafter, collectively referred to as a "plant"), for example, an industrial plant such as a chemical industrial plant, a plant for managing and controlling a wellhead such as a gas field and oil field and its surroundings, a plant for managing and controlling an electrical power generation such as water power, fire power, and nuclear power, a plant for managing and controlling an energy harvesting such as photovoltaic power generation and wind-power generation, and a plant for managing and controlling a water and sewerage, and a dam, a distributed control system (DCS) in which on-site devices such as measures and actuators, which are referred to as field devices, are connected via a communication means to controllers, which control the field devices, has been implemented to realize a high level of automated operation. In the plant in which such a distributed control system is implemented, the maintenance for the field devices (hereinafter, also simplified and referred to as "devices") is regularly or irregularly performed by workers in order to prevent abnormal operation, maintain measurement accuracy, and the like.

The maintenance of the field devices is performed using, for example, a device maintenance apparatus capable of performing wire communication or wireless communication with the field devices. The device maintenance apparatus is, for example, a laptop computer, a tablet computer, a personal digital assistant (PDA), a smartphone, or the like in which a dedicated program for performing the maintenance of the field devices is installed. The maintenance items for the field devices include, for example, various types of maintenance work in accordance with the field devices which are maintenance targets, such as checking work for reading and checking device information (parameters) set in the field devices of the maintenance targets and setting work for setting new device information in the field devices which are maintenance targets. Also, the maintenance items include visual checking for checking corrosion or the like of a pipe of a facility, audible checking for checking a rotation sound of a motor of a facility, operation noise of a pump, or the like, or olfactory checking for checking for leaking of liquid or gas from a pipe of a facility or a tank by odor, and checking results may be recorded on the device maintenance apparatus.

The device maintenance apparatus displays a list of field devices of the maintenance targets on the display page (for example, refer to Japanese Unexamined Patent Application, First Publication No. 2015-109011). A worker who performs maintenance selects one field device to be maintained from the list of field devices displayed on the display page. The device maintenance apparatus executes the maintenance item for the selected field device and stores and displays the maintenance result as a maintenance record.

Because an operation of executing the maintenance item and an operation of storing or displaying a maintenance record are required to be performed in different display modes (including a complex switching operation of the display page and the like), the workability may decrease.

Also, when the maintenance records are simply stored as a history, when a maintenance record is simply viewed, the number of days that have elapsed after execution of the maintenance item and a time at which the next maintenance item should be executed may not be immediately determined and appropriate maintenance items may not be executed.

EP 1 262 848 A2 discloses a remote maintenance method, a remote maintenance system, and an industrial device for enabling control and thorough services and billing according to the contents of the remote maintenance operation and the request destination of maintenance and enabling access limit according to the attribute of a service person, access limit according to the device state, and output limit according to the output mode. The industrial device installed at the factory and the operation device installed in the maintenance center are connected via the network. The operation device transmits command information indicating a command concerning maintenance to the industrial device and the industrial device executes a process according to the received command information, generates charge information indicating a charge concerning maintenance according to the contents of the executed process, and outputs the whole or a part of the generated charge information to the output device of the industrial device.

### SUMMARY OF THE INVENTION

An aspect of the present invention provides a device maintenance apparatus, a device maintenance system, a device maintenance method, and a storage medium for improving work efficiency by facilitating visibility of maintenance items to be executed and supporting appropriate execution of maintenance items.

According to the invention the above object is achieved by means of device maintenance apparatus according to claim 1, the device maintenance method of claim 12 and the computer program according to claim 15. The dependent claims are directed to different advantageous aspects of the invention.

### BRIEF DESCRIPTION OF THE DRAWINGS

FIG. 1 is a block diagram showing an example of a hardware configuration of a device maintenance apparatus according to an embodiment.
FIG. 2 is a block diagram showing an example of a functional configuration of a device maintenance apparatus according to the embodiment.
FIG. 3 is a flowchart showing an example of operations of the device maintenance apparatus according to the embodiment.
FIG. 4 is a diagram showing an example of a main page displayed by the device maintenance apparatus according to the embodiment.
FIG. 5 is a diagram showing an example of a button display area displayed by the device maintenance apparatus according to the embodiment.
FIG. 6 is a diagram showing an example of a menu button displayed by the device maintenance apparatus according to the embodiment.
FIG. 7 is a diagram showing an example of a setting page of a prompting information display displayed by the device maintenance apparatus according to the embodiment.
FIG. 8 is a diagram showing an example of a shaking display displayed by the device maintenance apparatus according to the embodiment.
FIG. 9 is a diagram showing an example of a deterioration display displayed by the device maintenance apparatus according to the embodiment.
FIG. 10A is a diagram showing an example of a prompting information display displayed by the device maintenance apparatus according to the embodiment.
FIG. 10B is a diagram showing an example of a prompting information display displayed by the device maintenance apparatus according to the embodiment.

### DETAILED DESCRIPTION OF THE INVENTION

Hereinafter, a device maintenance apparatus, a device maintenance method, and a storage medium according to an embodiment of the present invention will be described with reference to the drawings.

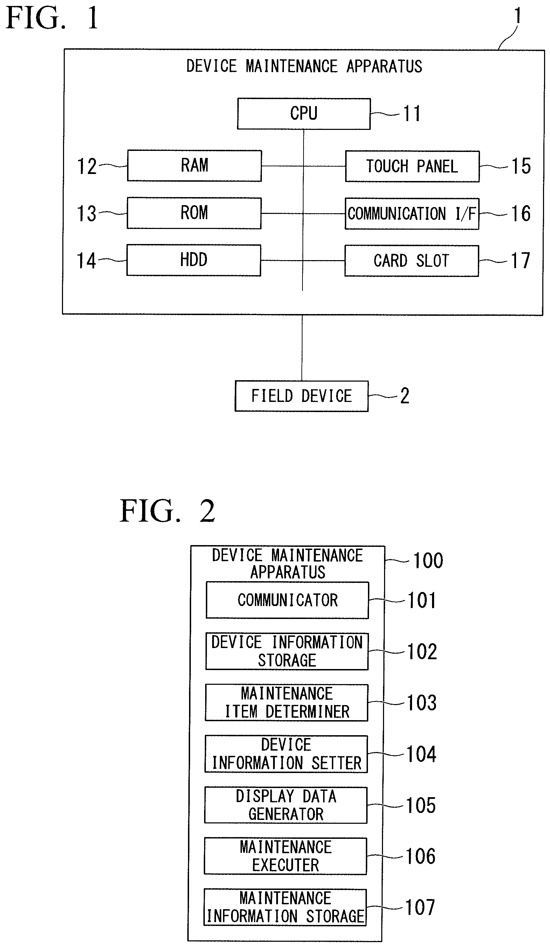

First, the hardware configuration of a device maintenance apparatus will be described with reference to FIG. 1. FIG. 1 is a block diagram showing an example of a hardware configuration of a device maintenance apparatus 1 according to the embodiment.

In FIG. 1, the device maintenance apparatus 1 includes a central processing unit (CPU) 11, a random access memory (RAM) 12, a read only memory (ROM) 13, a hard disk drive (HDD) 14, a touch panel 15, a communication interface (I/F) 16, and a card slot 17. The device maintenance apparatus 1 is communicatively connected to a field device 2.

The device maintenance apparatus 1 includes a general-purpose apparatus such as a laptop computer, a tablet computer, a PDA, or a smartphone, or a dedicated apparatus for device maintenance. The device maintenance apparatus 1 includes device maintenance programs for maintaining a field device and executes the device maintenance programs to support the maintenance work for the field device. The device maintenance apparatus 1 is carried in a plant and operated by a worker who performs the maintenance work.

The CPU 11 executes programs stored in the RAM 12, the ROM 13, or the HDD 14 to control the device maintenance apparatus 1. A device maintenance program is acquired from a storage medium storing the device maintenance program, or a server or the like for providing the device maintenance program via a network, installed into the HDD 14, and stored in the RAM 12 so that the device maintenance program stored in the RAM 12 is readable by the CPU 11.

The touch panel 15 has an operation and display function including an operation input function and a display function. The touch panel 15 displays information such as maintenance information related to the maintenance of a field device. In addition, the touch panel 15 enables the worker to perform an operation input using the fingertips, a touch pen, or the like. A case in which the device maintenance apparatus 1 includes the touch panel 15 having the operation and display function will be described in the present embodiment, but the device maintenance apparatus 1 may include a display having a display function and an operation input apparatus having an operation input function. In this case, in the present embodiment, a display page of the touch panel 15 can be implemented as a display page of a display and an operation of the touch panel 15 can be implemented as an operation of the operation input apparatus. The touch panel 15 may be implemented in various types, such as a display in a head-mount type, a glasses type, a watch type, or the like.

The communication I/F 16 controls the communication with the field device 2 or other apparatuses using wire communication or wireless communication. The communication I/F 16 includes, for example, a network adaptor. The other apparatuses include, for example, another device maintenance apparatus, a maintenance information management server for managing maintenance information, a DCS control apparatus, a factory automation (FA) computer, and a programmable logic controller (PLC) that are not shown.

The communication I/F 16 controls the communication with the field device 2 using a communication protocol adaptable to the field device 2. Various communication protocols are used for various field devices 2 used in the plant. Therefore, the communication I/F 16 controls the communication with each of the field devices 2 using a communication protocol adaptable to each of the field devices 2. For example, the communication I/F 16 controls the communication with the field device 2 using ISA100, which is a wireless communication standard of an International Society of Automation (ISA). The communication I/F 16 may control the communication with the field device 2 using a dedicated communication protocol for industrial instruments, such as Highway Addressable Remote Transducer (HART) (registered trademark), BRAIN (registered trademark), FOUNDATION Fieldbus, or PROFIBUS. The communication I/F 16 may control the communication with the field device 2 or the DCS using a general-purpose communication protocol, such as wireless LAN communication, wired LAN communication, infrared communication, or near field wireless communication.

The card slot 17 is a slot into which a PC card is inserted. The card slot 17 makes the function of the inserted PC card available in the device maintenance apparatus 1. The PC card can provide, for example, a communication function for implementing specific communication or a storage function.

The field device 2 communicatively connected to the device maintenance apparatus 1 includes an input device for inputting a signal indicating a physical quantity (pressure, temperature, or the like) to the device maintenance apparatus 1 such as, for example, a differential pressure gauge, a thermometer, or a flowmeter, and an output device for outputting a control signal to change an opening amount of a control valve from the device maintenance apparatus 1 such as the control valve. In FIG. 1, only one field device 2 is shown for simplification. However, as described above, various field devices 2 may be used in the plant and the device maintenance apparatus 1 may be connected to a plurality of field devices 2.

This ends the description of the hardware configuration of the device maintenance apparatus 1 with reference to FIG. 1.

Next, a functional configuration of a device maintenance apparatus will be described with reference to FIG. 2. FIG. 2 is a block diagram showing an example of a functional configuration of a device maintenance apparatus 100 according to the embodiment. In the following description, FIG. 1 will be appropriately referred to.

In FIG. 2, the device maintenance apparatus 100 has functions of a communicator 101 (acquirer), a device information storage 102, a maintenance item determiner 103, a device information setter 104, a display data generator 105, a maintenance executer 106, and a maintenance information storage 107. The above-described functions of the device maintenance apparatus 100 can be implemented by executing the program using the CPU 11 shown in FIG. 1.

That is, the above-described functions of the device maintenance apparatus 100 are functional modules implemented by software.

The communicator 101 controls the communication with the field device 2 or other devices via the communication I/F 16 and acquires the information of the field device 2. The setting of parameters (device information) of the field devices 2 in conformance with a standard such as, for example, ISA100, HART, or BRAIN, the reading of parameters, the checking of parameters, and the like are performed using the communication controlled by the communicator 101. The communicator 101 may control wireless LAN communication, wired LAN communication, infrared communication, near field wireless communication, and the like. The communicator 101 may include program modules, each of which performs control adaptable to each piece of communication. The communicator 101 may be configured so that a program module required for each piece of communication can be added and installed. The communicator 101 can automatically (or manually) recognize the field device 2 connected via the communication I/F 16 and acquire parameters of the recognized field device 2.

The acquirement of the information of the field device 2 is not limited to information acquirement based on the above-described communication. For example, the worker may visually check a tag name or a model name of the field device 2 for key input or capture an image of a nameplate of the field device 2 in which the tag name or model name is written using a camera attached to the device maintenance apparatus 1 to allow the tag name or model name to be recognized and acquired from the captured image.

The device information storage 102 stores the device information of the field device 2 and maintenance item information corresponding to the device information. The parameters (device information) of the field device 2 stored in the device information storage 102 include, for example, information for identifying the field device 2 such as a device tag, a device address, a manufacturer, a device ID or device type, a model name, or a communication standard of the field device 2, or measurement data measured in the field device 2.

The maintenance items stored in the device information storage 102 include the checking of parameters set in the field device 2, the setting of parameters for the field device 2, a predetermined test, a predetermined adjustment, and the like. The maintenance items may include an output of a report for reporting execution results of a maintenance item, and the like. In the present embodiment, the maintenance items stored in the device information storage 102 include, for example, a loop test, a zero point adjustment, a span adjustment, a one-touch report, a detail diagnosis information display, a tag/address/role setting, a setting/cancel of a setting limitation, an installation of a device type manager (DTM), an installation of a device description (DD), a parameter acquirement, a valve calibration, a device squawk, an ISA100 provisioning, a device online service/offline service switching, a service mode switching, and a valve partial stroke test (a partial operation test).

The device information storage 102 associates each field device 2 with a maintenance item to be executed in the field device 2 and readably stores the associated information. The device information storage 102 can associate one or more maintenance items with one field device 2. The above-described maintenance items include an executable maintenance item and a non-executable maintenance item in a predetermined field device 2. For example, the maintenance item of the valve calibration is executable in a field device 2 with a valve, but is not executable in a field device 2 without a valve such as a thermometer. The device information storage 102 stores an executable maintenance item in each field device 2 in association with the field device 2. The association of the maintenance item with the device information of the field device 2 can be performed on the basis of a setting file in which the association is previously set. The setting file may include the association of information such as a device type or a communication standard with the maintenance item. In addition, the association of the maintenance item with the field device 2 may be arbitrarily set by the worker. The association of the maintenance item with the field device 2 may be set by the device information setter 104.

No maintenance item may be associated with the field device 2. For example, the device information storage 102 stores information indicating that no maintenance item is associated with the field device 2 that has malfunctioned or is not in use. Therefore, this indicates that maintenance work is unnecessary. The device information storage 102 may store the associated information in, for example, the HDD 14.

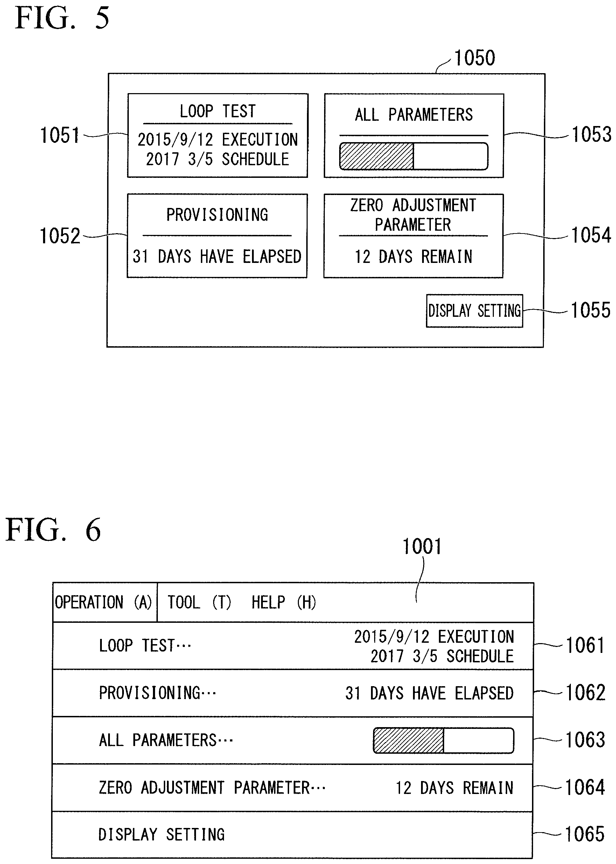

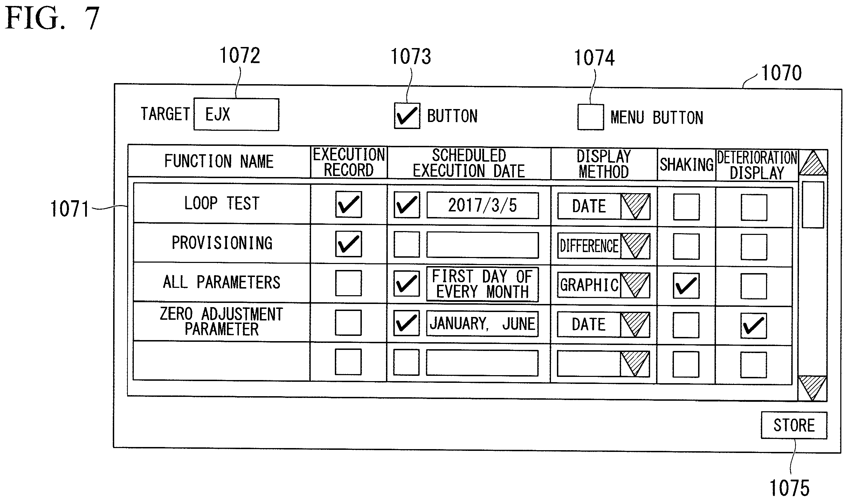

In addition, the device information storage 102 stores settings of display content of prompting information for prompting execution of maintenance items for each maintenance item associated with a field device. The prompting information for prompting the execution of a maintenance item is information for prompting the worker to execute the maintenance item on the basis of the execution information of the maintenance item. The execution information of the maintenance item is information such as an execution date and time and an execution result of the maintenance item executed on the field device in the past. The information for prompting the worker to execute the maintenance item is information for supporting the appropriate execution of the maintenance item by the worker performing perception through visual confirmation or the like. Details of display content of the prompting information will be described below with reference to FIGS. 5, 6, 8, and 9. Setting of the display content of the prompting information will be described below with reference to FIG. 7.

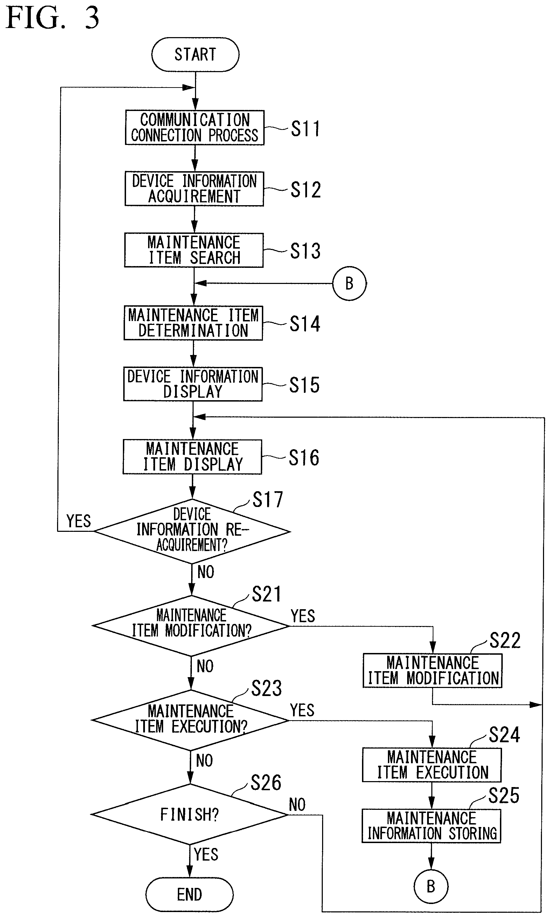

The maintenance item determiner 103 determines maintenance items to be displayed on the touch panel 15 from the maintenance items stored in the device information storage 102 on the basis of the device information (also referred to as "parameters") acquired by the communicator 101. For example, if five maintenance items are associated with one field device 2 in the device information storage 102, the maintenance item determiner 103 determines three maintenance items among the five associated maintenance items. The details of the maintenance item determination method will be described with reference to FIG. 3. The maintenance item determiner 103 outputs the determined maintenance items to the display data generator 105.

The device information setter 104 provides a user interface (UI) for setting the display of parameters of the field devices 2 to be stored in the device information storage 102, maintenance items, and prompting information for prompting the execution of the maintenance item corresponding to the maintenance item. For example, the device information setter 104 pre-acquires the information of the parameters of the field device 2 and the maintenance items via the communication I/F 16. The device information setter 104 displays settings of the acquired information of the parameters of the field devices 2 and the maintenance items and the prompting information on the touch panel 15 and enables the settings of the field devices 2, the maintenance items, and the prompting information to be associated. The device information setter 104 may output the set association information to the device information storage 102.

The display data generator 105 generates display data for displaying the parameters of the field device 2 acquired by the communicator 101 communicatively connected to the field device 2 on the touch panel 15. In addition, the display data generator 105 generates display data for displaying the maintenance items determined by the maintenance item determiner 103 in association with the displayed parameters of the field device 2 along with the parameters of the field device 2. For example, the maintenance items associated with the parameters of the field devices 2 are displayed on the touch panel 15. If a plurality of field devices 2 are displayed, the maintenance items may be displayed for each of the field devices 2. The description "generating display data to be displayed" may be simplified as "displaying." The display data generator 105 may be referred to as a display. That is, the display in the present embodiment may be a display device such as a touch panel 15 or a device for generating display data to be displayed on the display device.

The display data generator 105 generates data for displaying an execution button for executing a maintenance item determined with respect to the connected field device 2. The execution button is an operation target displayed on the touch panel 15 and is one embodiment of an "operator." The maintenance item is executed by selecting the operator using a mouse or the like. In the present embodiment, an operator to be operated from a menu bar is also assumed to be included. Also, the menu bar is arranged as an operation area in which operation commands of a window or an application are arranged as main menus divided into major items such as "File," "Edit," and "Display" and a predetermined operation can be performed by selecting each menu. The execution button is represented by, for example, graphics, characters, icons, or symbols. The worker can operate the icon or the like displayed on the touch panel 15 to execute the maintenance item. An example of an execution button having a rectangular area in which characters are displayed is shown in FIG. 5 and the like. The worker can touch the rectangular area of the operator displayed on the touch panel 15 to execute the maintenance item.

The display data generator 105 generates display data for displaying execution information of the maintenance item related to the execution button of the maintenance item to be displayed and prompting information for prompting the execution of the maintenance item on the basis of the execution information of the maintenance item along with the execution button. A display example of the touch panel 15 based on the display data generated by the display data generator 105 will be described below with reference to FIGS. 5 and 6.

The maintenance executer 106 executes the maintenance item displayed by the display data generator 105 and operated by the worker (for example, the depression of the button) with respect to the field device 2. A maintenance item is separately executed for each operated maintenance item. For example, when the execution button of one maintenance item is operated, the one maintenance item is executed. The maintenance executer 106 may perform, for example, the setting for the maintenance item, the display of a progress state of the maintenance item, the display of execution results of each maintenance item, and the like.

The maintenance information storage 107 stores the results of each maintenance item executed by the maintenance executer 106. The results of the maintenance item include, for example, an execution date and time of the maintenance item, execution results of the maintenance item, a maintenance plan based on the execution results of the maintenance item, and the like. The results of the maintenance item stored in the maintenance information storage 107 are acquired from, for example, the maintenance item determiner 103 or the maintenance executer 106.

In FIG. 2, the case in which functions of the communicator 101, the device information storage 102, the maintenance item determiner 103, the device information setter 104, the display data generator 105, the maintenance executer 106, and the maintenance information storage 107 provided in the device maintenance apparatus 10 are implemented by software has been described. However, the above-described one or more functions provided in the device maintenance apparatus 10 may be implemented by hardware. In addition, one function of the above-described functions provided in the device maintenance apparatus 10 may be divided into a plurality of functions and executed. Two or more of the above-described functions provided in the device maintenance apparatus 10 may be integrated into one function and executed.

This ends the description of the functional configuration of the device maintenance apparatus 100 with reference to FIG. 2.

Next, the operations of the device maintenance apparatus 10 will be described with reference to FIG. 3. FIG. 3 is a flowchart showing an example of operations of the device maintenance apparatus 10 according to the embodiment. The operations of the device maintenance apparatus 10 to be described with reference to FIG. 3 are implemented by executing each function described with reference to FIG. 2 using, for example, the CPU 11 of the device maintenance apparatus 10. In the following description, FIGS. 1 and 2 will be appropriately referred to.

In FIG. 3, the device maintenance apparatus 10 performs a communication connection process (step S11). The communicator 101 is communicatively connected to the field device 2 connected to the communication I/F 16 via a predetermined protocol to perform the communication connection process. For example, the device maintenance apparatus 10 is connected to the field device 2 having a predetermined device address via a predetermined communication protocol.

After performing the processing of step S11, the device maintenance apparatus 10 acquires parameters (device information) from the connected field device 2 (step S12). The acquirement of the parameters from the field device 2 is performed by the communicator 101. For example, if two field devices 2 are connected in step S11, the communicator 101 acquires parameters from each of the two field devices 2. In steps S11 to S12, the case in which the parameters are acquired from the field device 2 connected via the communication 1/F 16 by the communication has been shown. However, the parameters may be acquired by, for example, a manual input from the worker or a method based on a camera or microphone attached to the device maintenance apparatus I other than communication.

After performing the processing of step S12, the device maintenance apparatus 10 searches for the maintenance items (step S13). The search for the maintenance items may be performed by the maintenance item determiner 103. The search for the maintenance items is performed using the information stored in the device information storage 102 in which the field device 2 is associated with the maintenance items on the basis of the parameters of the field device 2 acquired in step S12. For example, if the parameters of two field devices 2 are acquired in step S12, the device maintenance apparatus 10 searches for the maintenance items associated with the parameters of each of the two field devices 2 and acquires the search results with regard to the two field devices 2. In the search for the maintenance items, prompting information for prompting the execution of the maintenance items based on the execution information of the maintenance items according to the found maintenance items is also searched for.

After performing the processing of step S13, the device maintenance apparatus 10 determines maintenance items to be displayed on the touch panel 15 as the execution buttons (step S14). The determination of the maintenance items in step S14 is, for example, a determination of whether or not to display an execution button of each determined maintenance item on the touch panel 15. The determination of the maintenance items may be a determination for all found maintenance items. The determination of the maintenance items may be a determination of a display order of the execution buttons to be displayed on the touch panel 15. For the determined maintenance items, prompting information for prompting the execution of the maintenance items is assumed to be determined. An example of the maintenance item determination method will be described. One of maintenance item determination methods exemplified below may be performed or two or more maintenance item determination methods exemplified below may be combined and performed.

### [Determination of maintenance item based on execution information of maintenance item]

The determination of the maintenance items in the processing of step S14 is executed on the basis of the execution information of the maintenance items. For example, the maintenance item determiner 103 determines a maintenance item for which a predetermined period has elapsed from the previous execution of the maintenance item, a maintenance item for which a malfunction has been found in the previous execution of the maintenance item, or the like as a maintenance item to be displayed as an execution button on the touch panel 15. The execution information of the maintenance item is stored in the device information storage 102 and is used for determining the maintenance item.

### [Determination of maintenance items based on arbitrary setting by worker]

The determination of the maintenance items in the processing of step S14 is executed on the basis of setting arbitrarily and previously set by the worker. For example, the worker selects one field device 2 displayed on the touch panel 15 and selects one or more execution buttons associated with the one selected field device 2 from a selection page of maintenance items displayed on the touch panel 15. The selected maintenance items are stored in, for example, the device information storage 102. The maintenance item determiner 103 determines maintenance items to be displayed as the execution buttons on the touch panel 15 according to the stored maintenance items.

### [Determination of maintenance items based on execution frequencies of maintenance items]

The determination of the maintenance items in the processing of step S14 is executed on the basis of execution frequencies of maintenance items as another example in which maintenance items are executed on the basis of the execution information of the maintenance items. For example, the maintenance items frequently executed by the worker are stored in the device information storage 102. The maintenance items frequently executed may be determined according to, for example, the number of executions during a period of the past several months on the basis of the execution information of the maintenance items. The maintenance item determiner 103 determines the maintenance items to be displayed as the execution buttons on the touch panel 15 on the basis of the stored maintenance items frequently executed.

### [Determination of maintenance items based on execution plan of maintenance items]

The determination of the maintenance items in the processing of step S14 is performed on the basis of the execution plan of maintenance items. For example, if the execution plan (maintenance plan) of maintenance items is previously generated, the maintenance plan is stored in the device information storage 102. The maintenance item determiner 103 determines maintenance items to be displayed as the execution buttons on the touch panel 15 on the basis of the stored maintenance plan. The executed maintenance items may be excluded from determination targets.

After performing the processing of step S14, the device maintenance apparatus 10 displays the parameters of the field device 2 acquired in step S12 on the touch panel 15 (step S15). The parameters of the field device 2 displayed on the touch panel 15 in the processing of step S15 include, for example, basic information such as a device tag and a device ID of the field device 2, measurement data acquired from the field device 2, and the like.

After performing the processing of step S15, the device maintenance apparatus 10 displays the execution buttons of the maintenance items determined in the processing of step S14 and prompting information for prompting the execution of the maintenance items on the touch panel 15 along with the parameters of the field device 2 displayed in the processing of step S15 (step S16). The execution buttons of the determined maintenance items are displayed along with the parameters of the field device 2, so that the maintenance items for the displayed field device 2 can be executed by one touch. Further, prompting information for prompting the execution of the maintenance items is displayed along with the execution buttons, so that it is easy to view the maintenance items to be executed and it is possible to support the appropriate execution of the maintenance items.

After performing the processing of step S16, the device maintenance apparatus 10 determines whether or not to perform re-acquirement of information of the field device 2 performed in the processing of step S12 (step S17). For example, if the worker connects the device maintenance apparatus 1 to a field device 2 having another device address, the re-acquirement of information of the field device 2 is required. The device maintenance apparatus 10 may determine whether or not to perform re-acquirement in accordance with the presence or absence of an explicit instruction from the worker or by automatically detecting the change in the connection state of the communication I/F 16. If the device maintenance apparatus 10 determines to perform the re-acquirement (step S17: YES), the device maintenance apparatus 10 returns to the processing of step S11 and performs the re-acquirement of information of the field device 2.

On the other hand, if the device maintenance apparatus 10 determines not to perform the re-acquirement (step S17: NO), the device maintenance apparatus 10 determines whether or not to modify the maintenance items. Various setting items are required to execute the maintenance item according to the maintenance item. The modification of the maintenance items enables the setting items for executing the maintenance items to be reset. The device maintenance apparatus 10 may determine whether or not to modify the maintenance items in accordance with the presence or absence of an explicit instruction from the worker or in accordance with whether or not there is a maintenance item for which no setting item is provided.

If the device maintenance apparatus 10 determines to modify the maintenance items, the device maintenance apparatus 10 provides a UI for modifying maintenance items via the touch panel 15 (step S22). After performing the processing of step S22, the device maintenance apparatus 10 re-displays the maintenance items in the processing of step S16.

On the other hand, if the device maintenance apparatus 10 determines not to modify the maintenance items, the device maintenance apparatus 10 determines whether or not an execution button of a maintenance item has been depressed (operated) by the worker (step S23). Whether or not an execution button of a maintenance item has been depressed by the worker can be determined by monitoring the operation events of the touch panel 15 using the maintenance executer 106.

If the device maintenance apparatus 10 determines that at least one execution button has been operated by the worker (step S23: YES), the device maintenance apparatus 10 executes the maintenance item corresponding to the depressed execution button (step S24). The maintenance item may be executed immediately after the execution button is depressed or after the execution button is depressed and another display or operation is performed. For example, the display of the touch panel 15 transitions to the display for checking details of the maintenance item after the execution button is depressed and the maintenance item may be executed by depressing a start button or the like. In addition, after the execution button is depressed, the display for checking whether or not to execute the maintenance item or the content related to the execution is displayed to be modifiable and an operation on the display is executed, so that the maintenance item may be executed. The maintenance executer 106 can execute the maintenance item.

After performing the processing of step S24, the device maintenance apparatus 10 stores the results of the executed maintenance item as execution information (step S25). The results of the executed maintenance item may be stored by the maintenance information storage 107. After performing the processing of step S25, the device maintenance apparatus 10 returns to the processing of step S14 and re-executes the determination of the maintenance items. That is, the determination of the maintenance items in the processing of step S14 is re-executed in accordance with the results of the executed maintenance item. By re-executing the determination of the maintenance items, for example, it is possible to delete the display of the execution button associated with the executed maintenance item, change the display order of the button associated with the executed maintenance item, or display an execution button associated with another maintenance item on the touch panel 15.

On the other hand, if the device maintenance apparatus 10 determines that the execution button has not been operated by the worker (step S23: NO), the device maintenance apparatus 10 determines whether or not the process of the flowchart shown in FIG. 3 has been completed (step S26). Whether or not the process has been completed may be determined by detecting, for example, whether or not the display page of the touch panel 15 transitions from the display page in which the maintenance item can be executed to another display page, whether or not a power switch is turned off, or the like. If the device maintenance apparatus 10 determines that the process has not been completed (step S26: NO), the device maintenance apparatus 10 returns to step S16 to perform the process. On the other hand, if the device maintenance apparatus 10 determines that the process has been completed (step S26: YES), the device maintenance apparatus 10 ends the process of the flowchart shown in FIG. 3.

This ends the description of the operation of the device maintenance apparatus 10 with reference to FIG. 3.

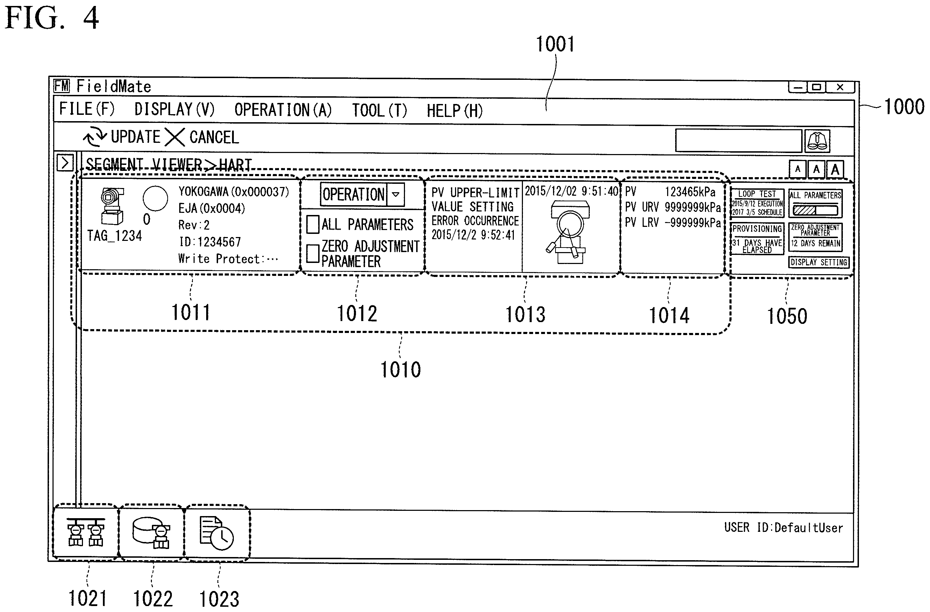

Next, the main page displayed on the touch panel 15 of the device maintenance apparatus 1 will be described with reference to FIG. 4. FIG. 4 is a diagram showing an example of a main page displayed by the device maintenance apparatus 1 according to the embodiment.

In FIG. 4, a main page 1000 is displayed on the display page of the touch panel 15. The main page 1000 is, for example, a display initially displayed after the device maintenance apparatus 1 is activated. The main page 1000 may be displayed after the device maintenance apparatus 1 is activated and then a login operation is performed on a login page (not shown) or after the initial setting is performed.

The main page 1000 is a page for displaying and registering parameters of the field device 2. The main page 1000 includes a menu bar 1001, a basic device information display 1011, a parameter acquirement button 1012, a memo/image display 1013, a parameter display 1014, and a button display area 1050. Here, the basic device information display 1011, the parameter acquirement button 1012, the memo/image display 1013, and the parameter display 1014 are hereinafter referred to as "device information 1010." The button display area 1050 is displayed along with the device information 1010 on the right side of the device information 1010 on the main page 1000. Details of the button display area 1050 will be described below with reference to FIG. 5. The main page 1000 is displayed on the touch panel 15 according to display data generated by the display data generator 105.

FIG. 4 shows a case in which one field device 2 is connected. If a plurality of field devices 2 are connected to the device information 1010, the number of connected field devices is displayed. When a plurality of pieces of device information 1010 are displayed, the button display area 1050 is displayed on the right side of each piece of device information 1010 in FIG. 4.

The menu bar 1001 has menus for major items of "file (F)," "display (V)," "operation (A)," "tool (T)," and "help (H)." The bracketed characters are shortcut keys capable of operating the menu bar by a predetermined key being pressed. When a menu of a major item is selected, further detailed menu items can be selected in a pull-down menu. In the present embodiment, it is assumed that a function similar to that of the button display area 1050 can be set for the menu button when the menu of "operation (A)" is operated in the menu bar 1001. Details of the menu button will be described below with reference to FIG. 6.

The basic device information display 1011 displays an icon, a device tag, a manufacturer, a device address, a device ID, a write protection state, and the like of the connected field device 2. The parameter acquirement button 1012 has an execution button for acquiring all parameters or a zero point adjustment parameter and a button for outputting the acquired parameters to an external file. The memo/image display 1013 has a comment display field for displaying comments (notes or tags) previously input to the field device 2 of the maintenance target and a photo display field for displaying a photo of the field device 2. The parameter display 1014 displays the parameters acquired from the field device 2.

The main page 1000 includes a segment viewer switching button 1021, a device navigator switching button 1022, and an operation log switching button 1023. The main page 1000 is displayed in a state in which the segment viewer switching button 1021 is depressed. The device navigator switching button 1022 displays a display page for registering device information executed in the device information setter 104. In addition, the operation log switching button 1023 displays a display page for displaying the maintenance information such as the execution information stored in the maintenance information storage 107.

This ends the description of the main page 1000 with reference to FIG. 4.

Next, details of the button display area 1050 described with reference to FIG. 4 will be described with reference to FIG. 5. FIG. 5 is a diagram showing an example of the button display area 1050 displayed by the device maintenance apparatus 1 according to the embodiment.

In FIG. 5, the button display area 1050 includes execution buttons of a loop test 1051, provisioning 1052, all parameters 1053, and a zero adjustment parameter 1054. Also, the button display area 1050 includes an execution button of the display setting 1055. The execution button displayed in the button display area 1050 is displayed in the processing of step S16 in FIG. 3. Prompting information is displayed in each of the execution buttons of the loop test 1051, the provisioning 1052, all the parameters 1053 and the zero adjustment parameter 1054. As described above, the prompting information is information for prompting the worker to execute the maintenance item on the basis of the execution information of the maintenance item. The button display area 1050 displays information of an execution schedule of maintenance items based on execution information as the prompting information.

The execution button of the loop test 1051 is used to display an execution date on which the loop test which is a maintenance item was executed in the past (which may be an "execution date and time" or the like) and the next scheduled execution date (which may be a "scheduled execution date and time" or the like) as the information of the execution schedule for the maintenance item of prompting information. The execution date of the maintenance item is displayed on the basis of the stored execution information when the maintenance item is executed. In addition, the scheduled execution date is determined on the basis of the execution information. The scheduled execution date can be determined by, for example, the predetermined number of elapsed days, a predetermined operation time, a predetermined production quantity, and the like from the execution date. Also, the scheduled execution date may be determined by a maintenance plan that is planned on the basis of the execution information. By displaying the execution date and the scheduled execution date as prompting information, it is possible for the worker to visually confirm the appropriate execution timing of the maintenance item and support the appropriate execution of the maintenance item. On the basis of the maintenance plan and the execution information, the scheduled execution date based on the maintenance plan, the number of days indicating the difference between the execution date and the scheduled execution date of the execution information, and the like can be used as prompting information. In addition, even when only the execution date is displayed as information of an execution schedule, the worker can plan to execute the maintenance item next while viewing an execution date of the past execution.

The execution button of the loop test 1051 is a button for causing the field device 2 to execute a loop test. In a control system such as a plant, a loop test is a test for outputting a simulation signal of a predetermined output level from a field device 2 to a higher-level device such as DCS and checking the operation of the field device 2 or whether the field device 2 is correctly connected to a higher-level device or the like.

The execution button of the provisioning 1052 displays the number of elapsed days after provisioning, which is a maintenance item, was executed in the past as information of the execution schedule for the maintenance item of the prompting information. The number of elapsed days of the maintenance item is displayed on the basis of the execution information stored when the maintenance item is executed. By displaying the number of elapsed days as prompting information, the worker can plan to implement the maintenance item next. In other words, the information of the number of elapsed days of the maintenance item can be used as information of the execution schedule of the maintenance item similar to the information of the scheduled execution date. By displaying the number of elapsed days of the maintenance item, it is possible for the worker to visually confirm the appropriate execution timing of the maintenance item and support the appropriate execution of the maintenance item.

The execution button of the provisioning 1052 is a button for causing the field device 2 to execute the provisioning. The provisioning is a maintenance item for pre-transmitting necessary information to the field device 2 from the device maintenance apparatus 1 and causing the field device 2 to set the information and is used to perform, for example, communication using a predetermined communication protocol.

The execution button of all the parameters 1053 is used to display a graphic in which the remaining number of days until the next scheduled execution date (which may be a "scheduled execution date" or the like) changes over time on the basis of the execution information as the execution schedule information of the maintenance item of the prompting information. Changes in the graphic can be changed according to the predetermined number of elapsed days, a predetermined operating time, a predetermined production quantity, or the like from the execution date of the maintenance item. The graphic may be changed according to a maintenance plan planned on the basis of the execution information. By displaying the remaining number of days until the scheduled execution date as prompting information in a graphic that changes over time, it is possible for the worker to visually recognize the appropriate execution timing of the maintenance item and support the appropriate execution of the maintenance item. The execution button of all the parameters 1053 is a button for acquiring all the parameters provided in the field device 2. Specifically, the device maintenance apparatus 1 transmits a command signal for transmitting all parameters to the field device 2 and causes the field device 2 to transmit all the parameters to the device maintenance apparatus 1.

The execution button of the zero adjustment parameter 1054 displays the number of days remaining until the next scheduled execution date (which may be the "scheduled execution date and time" or the like) as the execution schedule information of the maintenance item of the prompting information in the form of text on the basis of the execution information. The remaining number of days can be changed according to a predetermined number of elapsed days, a predetermined operation time, a predetermined production amount, and the like from the execution date of the maintenance item. The remaining number of days may be changed according to the maintenance plan planned on the basis of the execution information. By displaying the remaining number of days until the scheduled execution date as prompting information by text, it is possible for the worker to visually recognize the appropriate execution timing of the maintenance item and support the appropriate execution of the maintenance item. The execution button of the zero adjustment parameter 1054 is a button for causing the field device 2 to perform a zero point adjustment.

The execution button of the display setting 1055 is a button for setting prompting information for each maintenance item displayed in the button display area 1050. Details when the execution button of the display setting 1055 is operated will be described below with reference to FIG. 7.

In the case of a maintenance item in which a malfunction was found in the previous execution, a display indicating that a malfunction was found may be provided as the prompting information. Thereby, for example, the worker recognizes a maintenance item for which a malfunction is likely to occur and is prompted to perform execution of re-checking by prioritizing the maintenance item more than other maintenance items. Also, an execution frequency within a predetermined period may be displayed as the prompting information. Thereby, for example, the worker is prompted to execute a maintenance item having a higher execution frequency by the maintenance item being confirmed as a maintenance item having higher priority than other maintenance items. On the other hand, the worker is prompted to execute maintenance items with a low execution frequency by these maintenance items being confirmed as maintenance items that have not been executed for a long time.

In addition, the example in which information of an execution schedule of the maintenance item based on the execution information is displayed as the prompting information is shown in FIG. 5, but information other than the information of the execution schedule of the maintenance item may be displayed as the prompting information. For example, a display indicating that the execution of the maintenance item is unnecessary may be configured to be displayed as prompting information. The display indicating that the execution of the maintenance item is unnecessary is not displayed, so that the display indicating that the execution of the maintenance item is unnecessary becomes information for prompting the worker to execute the maintenance item.

This ends the description of the button display area 1050 with reference to FIG. 5.

Next, a menu button of the menu bar 1001 described with reference to Fig. 4 will be described with reference to FIG. 6. FIG. 6 is a diagram showing an example of a menu button displayed by the device maintenance apparatus 1 according to the embodiment.

In FIG. 6, the menu bar 1001 shows an operation menu when the menu item "operation (A)" is selected. The operation menu includes menu buttons of a loop test 1061, provisioning 1062, all parameters 1063, and a zero adjustment parameter 1064. In addition, the operation menu includes a menu button of display setting 1065. Functions of the menu buttons of the loop test 1061, the provisioning 1062, all the parameters 1063, the zero adjustment parameter 1064, and the display setting 1065 are similar to those of the execution buttons of the loop test 1051, the provisioning 1052, the all parameters 1053, the zero adjustment parameter 1054 and the display setting 1055. Also, the prompting information displayed on each execution button is similar to that of FIG. 5. That is, in the present embodiment, because it is possible to provide similar functions to the worker using the execution button displayed in the button display area 1050 and the menu button displayed on the menu bar, it is possible to execute the operation of any one of the buttons in accordance with preference of the worker. FIGS. 5 and 6 show display modes in which the execution button and the menu button are used to display the same prompting information, but a display mode in which the prompting information displayed for each button differs according to a setting described below with reference to FIG. 7 can be provided.

The prompting information is displayed in the display range of the execution button or the menu button in FIGS. 5 and 6, but the display mode of the prompting information is not limited thereto. For example, the prompting information may be displayed in a scroll manner on the execution button or the menu button. In addition, by performing a long press operation or the like on the prompting information part (or the execution button or the menu button) for a long time, more detailed information may be displayed on another window or the like.

This ends the description of the menu button with reference to FIG. 6.

Next, a setting page of the prompting information display when the execution button of the display setting 1055 of FIG. 5 or the menu button of the display setting 1065 of FIG. 6 is operated will be described with reference with FIG. 7. FIG. 7 is a diagram showing an example of a setting page of a prompting information display displayed by the device maintenance apparatus 1 according to the embodiment.

In FIG. 7, the setting page 1070 has a setting list 1071, a target 1072, button selection 1073, menu button selection 1074, and store 1075. The setting page 1070 is a display page displayed when the execution button of the display setting 1055 of FIG. 5 or the menu button of the display setting 1065 of FIG. 6 is operated.

The setting list 1071 is a display page for setting prompting information to be displayed for each maintenance item. In the setting list 1071, the item of the function name is the function name of the maintenance item and a maintenance item such as a loop test is set as in FIG. 5 and the like. The maintenance item determiner 103 can determine the maintenance item displayed in the item of the function name. An item of an execution record is a check box for setting whether or not to display the execution record in the prompting information. The execution record is, for example, a date on which the maintenance item was executed in the past.

In the setting list 1071, the items of the scheduled execution date are a check box for setting whether or not to display the scheduled execution date in the prompting information and a text box for setting the display mode of the scheduled execution date. For example, the date can be directly input to the text box of the scheduled execution date by a manual input. Also, a date or the like of periodic execution may be input as the prompting information to the text box. Also, the number of elapsed days, the operation time, and the production quantity from the execution date of the maintenance item may be input as the prompting information. The prompting information such as the production quantity can be acquired from another device that manages the production quantity via the communication I/F 16.

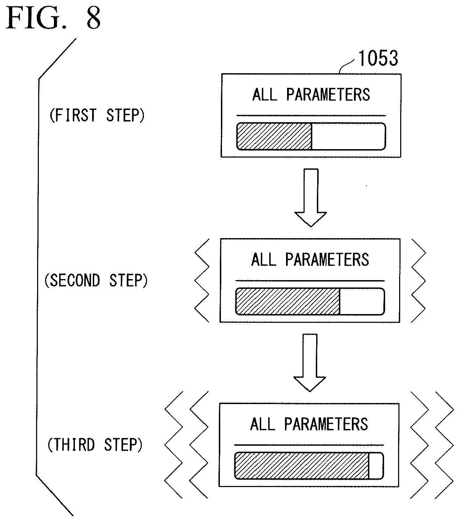

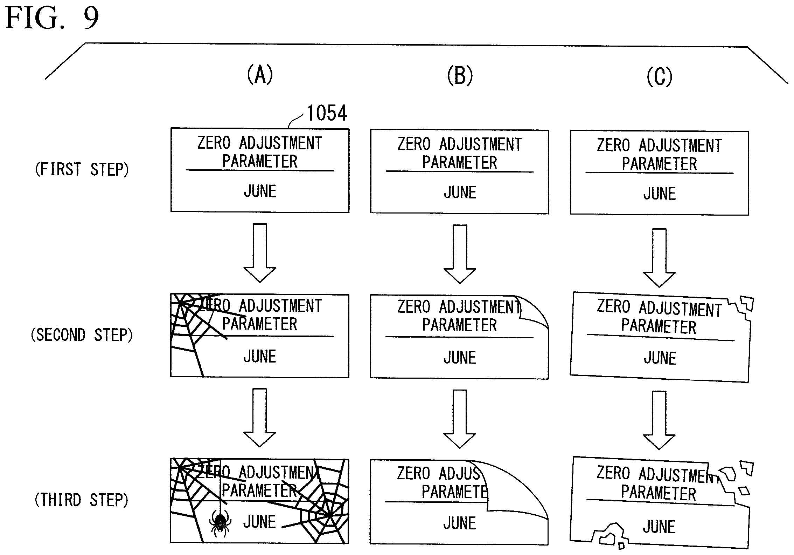

In the setting list 1071, the item of the display method is a pull-down menu for setting the display mode of the prompting information. A difference in the pull-down menu is a difference between a display date on which the prompting information is displayed in the button display area 1050 and the execution date or the scheduled execution date, a difference from the execution date is displayed by the number of elapsed days, and a difference from the scheduled execution date is displayed by the remaining number of days. An item of shaking is a check box for selecting whether or not to use a shaking display in the display mode of prompting information. Also, a deterioration display is a check box as to whether or not to use the deterioration display in the display mode of prompting information. Details of the shaking display and the deterioration display will be described below with reference to FIGS. 8 and 9.

The target 1072 is a text box for designating a field device which is a maintenance target to be displayed on the setting page 1070. For example, information of a symbol or a name for specifying a model or series of the field device 2 can be input to the target 1072. The information input to the target 1072 may be a search key for searching for device information stored in the device information storage 102.

The button selection 1073 is a check box for setting whether or not to display the prompting information in the button display area 1050. In addition, the menu button selection 1074 is a check box for setting whether or not to display the prompting information in the operation menu of the menu bar 1001. FIGS. 5 and 6 show display modes when the check boxes of the button selection 1073 and the menu button selection 1074 are selected.

The store 1075 is a button for storing the setting contents set in the setting page 1070. The stored setting contents is referred to when the display page to be displayed on the touch panel 15 is generated in the display data generator 105 and the prompting information is displayed in the display mode according to the setting.

The maintenance item for setting the prompting information display in the setting page shown in FIG. 7 is based on the device information stored in the device information storage 102. However, for example, the worker may set the prompting information display without determining the device information on the setting page.

This ends the description of the setting page for prompting information display with reference to FIG. 7.

Next, the shaking display of the prompting information set in the setting page of the prompting information display of FIG. 7 will be described with reference to FIG. 8. FIG. 8 is a diagram showing an example of a shaking display displayed by the device maintenance apparatus according to the embodiment. The shaking display is an example of a graphical display that changes over time on the basis of the execution information.

FIG. 8 shows a display mode when the shaking display is set for all the parameters 1053 described in FIG. 5. The display of all the parameters 1053 in first to third steps shown in FIG. 8 shows a case in which a three-step shaking display is set with respect to the progression of the graphic that changes over time on the basis of the execution information.

The first step shows a case in which a graphic indicating the remaining number of days until the next scheduled execution date shows the passage of a period of about half of the time as a graphic that changes over time on the basis of the execution information. In the first step, none the parameters 1053 are subjected to a shaking display. Because there is no shaking display, the worker can visually confirm that the date is not approaching that scheduled for the execution of the maintenance item yet.

The second step shows a case in which a graphic indicating the remaining number of days until the next scheduled execution date has progressed beyond the first step. In the second step, it is assumed that all the parameters 1053 are displayed with slight shaking. According to the small-shaking display, the worker can visually recognize that the execution schedule of the maintenance item is approaching.

The third step shows a case in which a graphic indicating the remaining number of days until the next scheduled execution date has progressed beyond the second step and the remaining number of days is small. In the third step, it is assumed that all the parameters 1053 are displayed with great shaking. According to the large-shaking display, the worker can visually recognize that the remaining number of days until the scheduled execution of the maintenance item is small.

In FIG. 8, the shaking display of prompting information is changed in three steps of the first to third steps, but the number of steps of the shaking display is not limited thereto and any number of steps may be used. For example, a magnitude of the shaking may be continuously increased with the passage of time. The transition from the first step to the second step and the transition from the second step to the third step may be arbitrarily set with respect to the progression of the graphic. In addition, the shaking display may be a vertical shaking display, a left/right shaking display, an oblique shaking display, or the like, or a combination of these displays. Also, the amplitude, frequency, or the like of the shaking may be increased to increase the shaking display.

This ends the description of the shaking display of the prompting information with reference to FIG. 8.

Next, the deterioration display of the prompting information set in the setting page of the prompting information display of FIG. 7 will be described with reference to FIG. 9. FIG. 9 is a diagram showing an example of a deterioration display displayed by the device maintenance apparatus according to the embodiment. The deterioration display is an example of a graphical display that changes over time on the basis of execution information. The deterioration display is, for example, a graphical display for representing the passage of time on the basis of the execution date of the previous maintenance item which is execution information. The deterioration display of FIG. 9 indicates a length of the number of elapsed days since "June" which is the month when the previous maintenance item was executed.

The (A) in FIG. 9 shows a display mode in which the number of spider webs increases over time in the deterioration display. When the number of spider webs increases, a period of the number of days elapsed since June is shown. The (B) in FIG. 9 shows a display mode in which the display of the execution button peels off over time in the deterioration display. The period of the number of days elapsed since June is indicated by increase in the peeling off of the display of the execution button. The (C) in FIG. 9 shows a display mode in which the display of the execution button collapses with the passage of time in the deterioration display. When the collapse of a display of the execution button increases, a period of the number of days elapsed since June is shown. In the display mode of the deterioration display, any one of the display modes may be selected in setting of the prompting information display.

In the deterioration display as well as the shaking display, the number of steps shaking display is not limited to 3 and any number of steps including no steps may be used. Also, the transition from the first step to the second step and the transition from the second step to the third step may be arbitrarily set with respect to the passage of time.

This ends the description of the deterioration display of the prompting information with reference to FIG. 9.

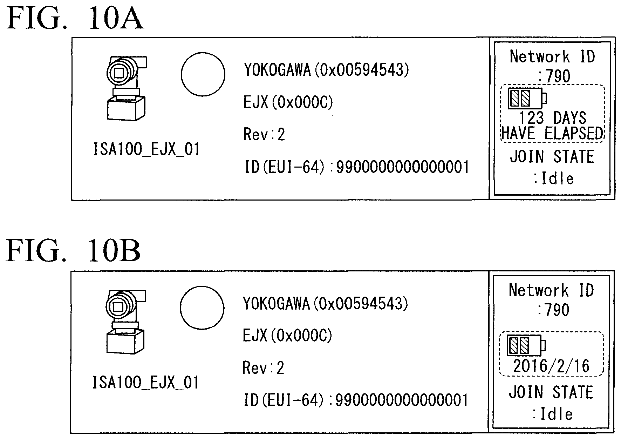

Next, a display example of the prompting information will be described with reference to FIGS. 10A and 10B. Each of FIGS. 10A and 10B is a diagram showing an example of a prompting information display displayed by the device maintenance apparatus according to the embodiment. Each of FIGS. 10A and 10B shows a device maintenance apparatus including a display unit for displaying information on a maintenance target device. The display unit displays an operator related to execution of a maintenance item associated with the maintenance target device and prompting information for prompting the execution of the maintenance item on the basis of the execution information of the maintenance item corresponding to the operator.

FIG. 10A shows the remaining amount (graphical display) of the battery of the field device 2 and the number of elapsed days from a date on which the maintenance work of replacing the battery was performed, so that the worker is notified of an appropriate date and time of the battery replacement. In addition, by displaying the remaining amount of the battery of the field device 2 and the scheduled date and time of the battery replacement in FIG. 10B, the worker is notified of the appropriate date and time of the battery replacement. When the battery replacement is performed as a maintenance item associated with the maintenance target device, the worker operates an operator for inputting the execution date and time of the battery replacement related to the execution of the battery replacement and stores the execution date and time of the battery replacement as maintenance information. For example, the operation for storing the execution date and time may be executed from menu bar operation.

This ends the description of the display example of the prompting information with reference to FIGS. 10A and 10B.

As described above, the device maintenance apparatus according to the present embodiment is a device maintenance apparatus including a display for displaying information of a device of a maintenance target, wherein the display displays an operator receivable of an operation for causing a maintenance item associated with the device of the maintenance target to be executed on the device along with prompting information for prompting execution of the maintenance item on the basis of execution information of the maintenance item corresponding to the operator, so that the maintenance item to be executed is easily and visually recognized and it is possible to improve the efficiency and support the appropriate execution of maintenance items.

An example in which the execution button or the menu button is displayed along with the prompting information in the button display area 1050 or the menu bar 1001 by displaying the operator receivable of an operation for causing the maintenance item associated with the device of the maintenance target to be executed on the device along with the prompting information for prompting the execution of the maintenance item on the basis of the execution information of the maintenance item corresponding to the operator has been described in the present embodiment, but a display mode of the operator and the prompting information are not limited thereto. For example, the operator and the prompting information may be displayed together on the display page of the touch panel 15 as the same display page, or may be displayed together in a scroll manner. In addition, another window is activated by touching information such as an icon or character and the device information and the operator may be displayed together on the other window. Alternatively, the transition or switching to another window is performed by touching information such as an icon or character and the device information and the operator may be displayed together on the other window. In addition, when a plurality of display panels are arranged, the operator and the prompting information may be displayed on separate display panels. In addition, although the operator displayed along with the prompting information is displayed in a predetermined area such as a rectangle on the touch panel 15, for example, the operator may be an object capable of being operated by performing a predetermined operation such as long pressing, swiping, or pinching on the touch panel without specifying the area on the touch panel. In addition, the operator may be displayed and operated on a lamp or a display provided in a hardware switch or the like.

In addition, an example in which the execution record, the scheduled execution date, the shaking display, the deterioration display, and the like in FIG. 7 are set in the setting of the display mode of the prompting information according to the present embodiment has been described, but a manner in which the display mode of the prompting information is set is not limited thereto. For example, setting of the display order of the execution buttons of the maintenance item, the ranking of the maintenance items to be executed, switching between display/non-display of an execution button according to rankings, and the like may be performed in setting of the display mode of the prompting information. Thereby, for example, a worker is prompted to prioritize the execution of a maintenance item higher in display order or a maintenance item having a higher ranking over the execution of other maintenance items.

Further, a case in which the prompting information according to the present embodiment is displayed on the touch panel 15 is shown, but the prompting information may change in display color, display size, font, or the like over time. For example, when the display color changes from blue to yellow or from yellow to red, execution of a maintenance item whose display color has changed may be prompted. Also, along with the display of the prompting information, a notification of the prompting information may be provided using a notification means such as audio, vibration or the like. For example, in the second step or the third step in FIG. 8, the device maintenance apparatus 1 may be actually vibrated using a vibrator or the like along with the vibration display. Expressing the prompting information in a color or a font, with shaking, or with deterioration may be used to signal the function (maintenance item) of an operator and may be used for the vendor of the device maintenance apparatus to prompt the user to execute a desired item. For example, user registration can be prompted by changing the display mode of an execution button for prompting information for user registration according to the number of days of non-registration elapsed for an unregistered user. In addition to the above-described embodiments, for example, a change may be made to the display mode such that it becomes more difficult to depress an execution button (touch operation is difficult) according to the number of days elapsed and a display indicating that the operation of its function (maintenance item) is not recommended may be provided to a user at a certain point in time.

The above-described various processes of the present embodiment may be implemented by recording a program for implementing functions in the apparatus described in the present embodiment into a computer readable storage medium, making a computer system read the program stored in the storage medium, and executing the program. The "computer system" may include an operating system and a hardware such as a peripheral device. If the World Wide Web is used, the "computer system" may include an environment for providing homepage (or display environment). The "computer readable storage medium" indicates a portable medium such as a flexible disk, a magnetic optical disk, a ROM, a writable non-volatile memory such as a flash memory, a CD-ROM and a storage device such as a hard-disk embedded in a computer system.

In addition, the "computer readable storage medium" may include a medium for storing a program for a given length of time like a volatile memory (for example, a Dynamic Random Access Memory (DRAM)) embedded in a computer system, which is a server or client when a program is transmitted via a communication line such as a network including the Internet and a phone line. The above-described program may be transferred, from the computer system including the storage device storing this program, to another computer system, via a transmission medium, or by transmission waves in the transmission medium. The "transmission medium" that transmits the program means a medium having a function to transmit information, such as a network (communication net) like the Internet, or a communication line (communication wire) like a phone line like. The above-described program may be used to implement a part of the above-described functions. In addition, the above-described program may implement the above-described functions in cooperation with another program previously stored in the computer system, so-called difference file (difference program).

Although the foregoing has been a description of the embodiment of the present invention with reference to the drawings, the specific configuration of the present invention is not limited to the embodiments described above, and can be freely modified within the scope of the present invention.

## Claims

1. A device maintenance apparatus, comprising:
a device information storage (102) for storing information of a field device (2) of a plant of a maintenance target, and at least one maintenance item and prompting information for prompting execution of the at least one maintenance item, the at least one maintenance item and the prompting information being associated with the information of the field device (2);
an acquirer (101) configured to acquire the information of the field device (2); and
a maintenance item determiner (103) configured to search for at least one maintenance item and prompting information associated with the acquired information of the field device (2) from the device information storage (102) and to determine the at least one maintenance item and the prompting information to be displayed on the display among the searched at least one maintenance item and the searched prompting information on the basis of the execution information of the at least one maintenance item; and
a display (105) configured to display an execution button receivable of an operation, the operation being for causing the determined at least one maintenance item to be executed on the field device (2) and to display the prompting information.

2. The device maintenance apparatus according to Claim 1, wherein
the display (105) is configured to display information of an execution schedule of the at least one maintenance item on the basis of the execution information as the prompting information.

3. The device maintenance apparatus according to Claim 1 or Claim 2, wherein
the display (105) is configured to display graphical display of the prompting information that changes over time on the basis of the execution information.

4. The device maintenance apparatus according to Claim 1, wherein
the display (105) is configured to display an execution date or an execution date and time on which the at least one maintenance item was executed in the past as the prompting information.

5. The device maintenance apparatus according to any one of Claims 1 to 4, wherein
the display (105) is configured to further display a setting page for setting a display mode of the prompting information.

6. The device maintenance apparatus according to any one of Claims 1 to 5, wherein
the display (105) is configured to display the number of elapsed days from a date on which the at least one maintenance item was executed in the past as the prompting information.

7. The device maintenance apparatus according to any one of Claims 1 to 6, wherein
the display (105) is configured to display shaking display of the execution button that changes over time on the basis of the execution information as the prompting information.

8. The device maintenance apparatus according to any one of Claims 1 to 7, wherein
the display (105) is configured to display deterioration display of the execution button that changes over time on the basis of the execution information as the prompting information.

9. The device maintenance apparatus according to any one of Claims 1 to 8, wherein
the maintenance item determiner (103) is configured to determine a maintenance item for which a predetermined period has elapsed from the previous execution of the maintenance item as the at least one maintenance item to be displayed as the button.

10. The device maintenance apparatus according to any one of Claims 1 to 8, wherein
the maintenance item determiner (103) is configured to determine a maintenance item for which a malfunction has been found in the previous execution of the maintenance item as the at least one maintenance item to be displayed as the button.

11. The device maintenance apparatus according to any one of Claims 1 to 8, wherein
the maintenance item determiner (103) is configured to determine the at least one maintenance item to be displayed as the button on the basis of execution frequencies of the at least one maintenance item.

12. A device maintenance method, comprising:
acquiring information of a field device (2) of a plant of a maintenance target;
searching for at least one maintenance item and prompting information associated with the acquired information of the field device (2) from a device information storage (102) storing the information of the field device (2), and at least one maintenance item and prompting information for prompting execution of the at least one maintenance item, the at least one maintenance item and the prompting information being associated with the information of the field device (2);
determining at least one maintenance item and prompting information to be displayed among the searched at least one maintenance item and the searched prompting information on the basis of the execution information of the at least one maintenance item; and
displaying an execution button receivable of an operation, the operation being for causing the determined at least one maintenance item to be executed on the field device (2) and displaying the prompting information.

13. The device maintenance method according to Claim 12, wherein
the display of the execution button and the prompting information includes displaying information of an execution schedule of the at least one maintenance item on the basis of the execution information as the prompting information.

14. The device maintenance method according to Claim 12 or Claim 13, wherein
the display of the execution button and the prompting information includes displaying graphical display of the prompting information that changes over time on the basis of the execution information.

15. A maintenance program, which when executed by a computer, causes the computer to perform the method of any of claims 12 to 14.

## Patentansprüche

1. Vorrichtungswartungsgerät mit:
einem Vorrichtungsinformationsspeicher (102) zum Speichern von Information einer Feldvorrichtung (2) einer Anlage eines Wartungsziels und zumindest eines Wartungsgegenstands und zum Anfordern von Information zum Anfordern der Ausführung des zumindest ein Wartungsgegenstands, wobei der zumindest eine Wartungsgegenstand und die Aufforderungsinformation mit der Information der Feldvorrichtung (2) verknüpft ist;
einem Erfasser (101), der ausgestaltet ist, um die Information der Feldvorrichtung (2) zu erfassen; und
einem Wartungsgegenstandsbestimmer (103), der ausgestaltet ist, um den zumindest einen Wartungsgegenstand zu suchen und Information, die mit der erfassten Information der Feldvorrichtung (2) verknüpft ist, von dem Vorrichtungsinformationsspeicher (102) anzufordern und um zu bestimmen, dass der zumindest eine Wartungsgegenstand und die Anforderungsinformation unter den gesuchten zumindest einem Wartungsgegenstand und der gesuchten Anforderungsinformation auf der Basis der Ausführungsinformation des zumindest einen Wartungsgegenstands auf der Anzeige angezeigt werden, und
eine Anzeige (105), die ausgestaltet ist, um eine Ausführungstaste anzuzeigen, die einen Betriebsvorgang empfangen kann, wobei der Betriebsvorgang zur Veranlassung ist, zu bestimmen, des zumindest einen Wartungsgegenstandes, der an der Feldvorrichtung (2) auszuführen ist, und zur Anzeige der Anforderungsinformation.

2. Vorrichtungswartungsgerät nach Anspruch 1, bei dem
die Anzeige (105) ausgestaltet ist, um Information eines ausführbaren Ablaufplans des zumindest einen Wartungsgegenstandes auf der Grundlage der Ausführungsinformation als die Anforderungsinformation anzuzeigen.

3. Vorrichtungswartungsgerät nach Anspruch 1 oder 2, bei dem
die Anzeige (105) ausgestaltet ist, um eine grafische Anzeige der Anforderungsinformation anzuzeigen, welche sich mit der Zeit auf der Grundlage der Ausführungsinformation ändert.

4. Vorrichtungswartungsgerät nach Anspruch 1, bei dem
die Anzeige (105) ausgestaltet ist, um als Anforderungsinformation Ausführungsdaten oder ein Ausführungsdatum und Zeit, zu der der letzte Wartungsgegenstand in der Vergangenheit ausgeführt wurde, anzuzeigen.

5. Vorrichtungswartungsgerät nach einem der Ansprüche 1 bis 4, bei dem
die Anzeige (105) ausgestaltet ist, um des Weiteren eine Einstellseite anzuzeigen, um einen Anzeigemodus der Anforderungsinformation einzustellen.

6. Vorrichtungswartungsgerät nach einem der Ansprüche 1 bis 5, bei dem
die Anzeige (105) ausgestaltet ist, um als Anforderungsinformation die Zahl der abgelaufenen Tage von einem Datum, zu dem der letzte Wartungsgegenstand in der Vergangenheit ausgeführt wurde, anzuzeigen.

7. Vorrichtungswartungsgerät nach einem der Ansprüche 1 bis 6, bei dem
die Anzeige (105) ausgestaltet ist, um als Anforderungsinformation eine Shaking-Anzeige der Ausführungstaste anzuzeigen, welche sich mit der Zeit auf der Grundlage der Ausführungsinformation ändert.

8. Vorrichtungswartungsgerät nach einem der Ansprüche 1 bis 7, bei dem
die Anzeige (105) ausgestaltet ist, um als Anforderungsinformation eine Verschlechterungsanzeige der Ausführungstaste anzuzeigen, die sich mit der Zeit auf der Grundlage der Ausführungsinformation ändert.

9. Vorrichtungswartungsgerät nach einem der Ansprüche 1 bis 8, bei dem
der Wartungsgegenstandbestimmer (103) ausgestaltet ist, um einen Wartungsgegenstand, für den eine vorgegebene Zeit von der vorhergehenden Ausführung des Wartungsgegenstands abgelaufen ist, als den zumindest einen Wartungsgegenstand zu bestimmen, der als die Taste anzuzeigen ist.

10. Vorrichtungswartungsgerät nach einem der Ansprüche 1 bis 8, bei dem
der Wartungsgegenstandbestimmer (103) ausgestaltet ist, um einen Wartungsgegenstand zu bestimmen, für den bei der vorhergehenden Ausführung des Wartungsgegenstands eine Fehlfunktion gefunden wurde, als den zumindest einen Wartungsgegenstand, der als die Taste anzuzeigen ist.

11. Vorrichtungswartungsgerät nach einem der Ansprüche 1 bis 8, bei dem
der Wartungsgegenstandbestimmer (103) ausgestaltet ist, um den zumindest einen Wartungsgegenstand zu bestimmen, der als die Taste anzuzeigen ist, auf der Grundlage der Ausführungsfrequenz des zumindest einen Wartungsgegenstandes.

12. Vorrichtungswartungsverfahren mit:
Erfassen von Information einer Feldvorrichtung (2) einer Anlage als ein Wartungsziel;
Suchen nach zumindest einem Wartungsgegenstand und Anforderungsinformation, die mit der erfassten Information der Feldvorrichtung (2) verknüpft ist, in einem Vorrichtungsinformationsspeicher (102), der Information der Feldvorrichtung (2) und zumindest einen Wartungsgegenstandes und Anforderungsinformation zur Anforderung der Ausführung des zumindest einen Wartungsgegenstands speichert, wobei der zumindest eine Wartungsgegenstand und die Anforderungsinformation mit der Information der Feldvorrichtung (2) verknüpft sind;
Bestimmen von zumindest einem Wartungsgegenstand und der Anforderungsinformation, die unter den gesuchten zumindest einem Wartungsgegenstand und gesuchter Anforderungsinformation anzuzeigen sind, auf der Grundlage der Ausführungsinformation des zumindest einen Wartungsgegenstands;
Anzeigen einer Ausführungstaste, die in der Lage ist, einen Betriebsvorgang zu empfangen, wobei der Betriebsvorgang dazu dient, den bestimmten zumindest einen Wartungsgegenstand an der Feldvorrichtung (2) auszuführen und die Anforderungsinformation anzuzeigen.

13. Vorrichtungswartungsverfahren nach Anspruch 12, bei dem
die Anzeige der Ausführungstaste und der Anforderungsinformation das Anzeigen von Information eines Ausführungsplanes des zumindest einen Wartungsgegenstandes auf der Grundlage der Ausführungsinformation als Anforderungsinformation umfasst.

14. Vorrichtungswartungsverfahren nach Anspruch 12 oder 13, bei dem
die Anzeige der Ausführungstaste und der Anforderungsinformation das Anzeigen von einer grafischen Anzeige der Anforderungsinformation umfasst, die sich mit der Zeit auf der Grundlage der Ausführungsinformation ändert.

15. Ein Wartungsprogramm, das, wenn es durch einen Computer ausgeführt wird, den Computer veranlasst, das Verfahren nach einem der Ansprüche 12 bis 14 auszuführen.

## Revendications

1. Appareil de maintenance de dispositif, comprenant :
un stockage d'informations de dispositif (102) destiné à stocker les informations d'un dispositif sur site (2) d'une unité d'une cible de maintenance, et au moins un point de maintenance et des informations d'invite destinées à demander l'exécution du au moins un point de maintenance, le au moins un point de maintenance et les informations d'invite étant associés aux informations du dispositif sur site (2) ;
un système d'acquisition (101) configuré pour acquérir les informations du dispositif sur site (2) ; et
un déterminateur de point de maintenance (103) configuré pour rechercher au moins un point de maintenance et des informations d'invite associés aux informations acquises du dispositif sur site (2) auprès du stockage d'informations de dispositif (102) et pour déterminer le au moins un point de maintenance et les informations d'invite à afficher sur l'écran parmi le au moins un point de maintenance recherché et les informations d'invite recherchées sur la base des informations d'exécution du au moins un point de maintenance ; et
un écran (105) configuré pour afficher un bouton d'exécution qui peut recevoir une opération, l'opération étant destinée à provoquer le fait que le au moins un point de maintenance soit exécuté sur le dispositif sur site (2) et pour afficher les informations d'invite.

2. Appareil de maintenance de dispositif selon la revendication 1, dans lequel
l'écran (105) est configuré pour afficher les informations d'un calendrier d'exécution du au moins un point de maintenance sur la base des informations d'exécution en guise d'informations d'invite.

3. Appareil de maintenance de dispositif selon la revendication 1 ou 2, dans lequel
l'écran (105) est configuré pour afficher une représentation graphique des informations d'invite qui change au fil du temps sur la base des informations d'exécution.

4. Appareil de maintenance de dispositif selon la revendication 1, dans lequel
l'écran (105) est configuré pour afficher une date d'exécution ou une date d'exécution et une date et une heure d'exécution auxquelles le au moins un point de maintenance a été exécuté par le passé en guise d'informations d'invite.

5. Appareil de maintenance de dispositif selon l'une quelconque des revendications 1 à 4, dans lequel
l'écran (105) est configuré pour afficher en outre une page de paramétrage destinée à paramétrer un mode d'affichage des informations d'invite.

6. Appareil de maintenance de dispositif selon l'une quelconque des revendications 1 à 5, dans lequel
l'écran (105) est configuré pour afficher le nombre de jours écoulés depuis une date à laquelle le au moins un point de maintenance a été exécuté par le passé en guise d'informations d'invite.

7. Appareil de maintenance de dispositif selon l'une quelconque des revendications 1 à 6, dans lequel
l'écran (105) est configuré pour afficher une version vibrante du bouton d'exécution qui change au fil du temps sur la base des informations d'exécution en guise d'informations d'invite.

8. Appareil de maintenance de dispositif selon l'une quelconque des revendications 1 à 7, dans lequel
l'écran (105) est configuré pour afficher une version détériorée du bouton d'exécution qui change au fil du temps sur la base des informations d'exécution en guise d'informations d'invite.

9. Appareil de maintenance de dispositif selon l'une quelconque des revendications 1 à 8, dans lequel
le déterminateur de point de maintenance (103) est configuré pour déterminer un point de maintenance pour lequel une période prédéterminée s'est écoulée depuis la précédente exécution du point de maintenance en guise de au moins un point de maintenance à afficher comme bouton.

10. Appareil de maintenance de dispositif selon l'une quelconque des revendications 1 à 8, dans lequel
le déterminateur de point de maintenance (103) est configuré pour déterminer un point de maintenance pour lequel un dysfonctionnement a été détecté lors de la précédente exécution du point de maintenance en guise de au moins un point de maintenance à afficher comme bouton.

11. Appareil de maintenance de dispositif selon l'une quelconque des revendications 1 à 8, dans lequel
le déterminateur de point de maintenance (103) est configuré pour déterminer le au moins un point de maintenance à afficher comme bouton sur la base des fréquences d'exécution du au moins un point de maintenance.

12. Procédé de maintenance de dispositif, comprenant :
l'acquisition d'informations d'un dispositif sur site (2) d'une unité de cible de maintenance ;
la recherche d'au moins un point de maintenance et d'informations d'invite associés aux informations acquises du dispositif sur site (2) auprès d'un stockage d'informations de dispositif (102) qui stocke les informations du dispositif sur site (2), et d'au moins un point de maintenance et d'informations d'invite destinées à demander l'exécution du au moins un point de maintenance, le au moins un point de maintenance et les informations d'invite étant associés aux informations du dispositif sur site (2) ;
la détermination d'au moins un point de maintenance et d'informations d'invite à afficher parmi le au moins un point de maintenance et recherché et les informations d'invite recherchées sur la base des informations d'exécution du au moins un point de maintenance ; et
l'affichage d'un bouton d'exécution qui peut recevoir une opération, l'opération étant destinée à provoquer l'exécution du au moins un point de maintenance déterminé sur le dispositif sur site (2) et à afficher les informations d'invite.

13. Procédé de maintenance de dispositif selon la revendication 12, dans lequel
l'affichage du bouton d'exécution et des informations d'invite comprend l'affichage des informations d'un calendrier d'exécution du au moins un point de maintenance sur la base des informations d'exécution en guise d'informations d'invite.

14. Procédé de maintenance de dispositif selon la revendication 12 ou 13, dans lequel
l'affichage du bouton d'exécution et des informations d'invite comprend l'affichage d'une représentation graphique des informations d'invite qui change au fil du temps sur la base des informations d'exécution.

15. Programme de maintenance, qui, lorsqu'il est exécuté par un ordinateur, permet à l'ordinateur d'exécuter le procédé selon l'une quelconque des revendications 12 à 14.
